# EUROPEAN PATENT APPLICATION

(11) **EP 1 207 267 A1**
(43) Date of publication of application: **22.05.2002**
(21) Application number: 01127598.9
(22) Date of filing: 19.11.2001
(51) Int. Cl.: E21B 43/26

(54) **An oil in water fracturing fluid emulsion, method of preparation and use for fracturing a subterranean formation**

(30) Priority: 20.11.2000 US 717330
(71) Applicant: Intevep SA, Caracas 1010 A (VE)
(72) Inventor: Kakadjian, Sarkis, San Antonio de Los Altos Edo Miranda (VE); Rauseo, Oscar, Colinas de Carrizal Edo Miranda (VE); Marquez, Rosalinda, San Antonio de los Altos Edo Miranda (VE); Blanco, Jose, La Rosaleda Sur, Edo, Miranda (VE)
(74) Representative: Hiebsch, Gerhard F., Dipl.-Ing.

(57) **Abstract**

An oil in water fracturing fluid emulsion includes a dispersed oil phase; and a continuous water phase in the form of a solution of cross-linkable polymer in water. A method for forming the emulsion, as well as a fracturing method using the emulsion, are also disclosed.

## Description

The invention relates to the field of fracturing fluids and, more particularly, to a fracturing fluid useful in fracturing a subterranean formation for enhancing production from same.

The use of fracturing fluids for enhancing production from subterranean formations is well known. In such endeavors, a fluid is pumped into a well with the intent of fracturing a particular formation so as to increase permeability of the formation so that fluids can flow more rapidly from the formation into a production well.

Important concerns when evaluating and formulating a fracturing fluid are pumpability, viscosity, cost and recoverability, among others. Numerous different types of fluids have been used as fracturing fluids. Conventionally used fluids include gasoline viscosified with napalm, gelled oils, linear gelled water, cross-linked gelled water and foamed gels.

In connection with pumpability and viscosity, it is desirable that the fluid be easily pumpable at low pumping pressures while sufficiently viscous that the fluid, when pumped into a well, will break-up a subterranean structure and increase the permeability of the structure as desired.

It is also desirable, once the subterranean formation is fractured, that the fluid be easily recovered from the well.

Conventional fluids utilize expensive additives in large amounts so as to meet these requirements, and the need remains for an acceptable fracturing fluid which is inexpensive in preparation and use, and which yields the desired results.

It is therefore the primary object of the present invention to provide a fracturing fluid which performs well as a fracturing fluid and has reduced cost for preparation.

It is a further object of the present invention to provide a method for preparing such a drilling fluid.

It is a still further object of the present invention to provide a method for fracturing a formation utilizing such a fracturing fluid.

Other objects and advantages of the present invention will appear hereinbelow.

The problems are solved by the teaching according to the independent claims. Particular developments are given in the dependent claims. Within the frame of the invention are all combinations of at least two of the descriptive elements and technical features disclosed in the claims and/or in the description.

In accordance with the present invention, the foregoing objects and advantages have been readily attained.

In accordance with the invention, an oil in water fracturing fluid emulsion is provided, which emulsion comprises a dispersed oil phase; and a continuous water phase comprising a solution of cross-linkable polymer in water.

In further accordance with the present invention, an oil in water fracturing fluid emulsion is prepared according to a method which comprises the steps of providing a water phase comprising a solution of a cross-linkable polymer in water; providing an oil phase; forming an oil in water emulsion from said water phase and said oil phase; adjusting pH of said emulsion to a pH of between about 9.0 and about 13.0; and cross-linking said polymer solution so as to provide a cross-linked emulsion.

In accordance with another aspect of the present invention, a method is provided for fracturing a subterranean formation through a well, which method comprises the steps of providing an oil in water fracturing fluid emulsion comprising a dispersed oil phase; a continuous water phase comprising a solution of cross-linkable polymer in water; and a propping agent carried by said emulsion; pumping said emulsion into a well communicated with a subterranean formation so as to form cracks in said formation; and removing said emulsion whereby said propping agent is positioned in said cracks.

Further advantages, characteristics and details of the invention are apparent from the following detailed description of preferred embodiments of the invention with reference to the attached drawing schematically illustrates wherein:
Figure 1 graphically illustrates viscosity over time for emulsions in accordance with the present invention when subjected to different amounts of breaker; and
Figure 2 graphically illustrates viscosity at different temperatures for a cross-linked emulsion in accordance with the present invention as compared to a polymer free gel.

The invention relates to an oil in water fracturing fluid emulsion which is useful for fracturing subterranean formations so as to improve permeability of same and, thereby, to improve production of hydrocarbons. In accordance with the present invention, the fracturing fluid is prepared utilizing inexpensive and readily available ingredients, and further utilizing reduced amounts of ingredients which increase the cost of conventional fracturing fluids.

In accordance with the present invention, the fracturing fluid is provided as an emulsion of a dispersed oil phase in a continuous water phase. As will be further discussed below, the water phase is provided as a polymer in water solution, and the emulsion is treated with a cross-linking agent which serves to cross-link the polymer and increase viscosity of the overall emulsion. This advantageously allows for using the emulsion as a fracturing fluid as well as a carrier of propping agents or propants which are left behind in the formation to keep fractures or cracks formed in the formation open, thereby enhancing production of hydrocarbons and other desired fluids.

The oil phase of the emulsion of the present invention may advantageously be any hydrocarbon which is preferably inexpensive and readily available such as, for example, gasoil, mineral oil and mixtures thereof. Of course, other suitable oil or hydrocarbon phases could be utilized so long as they are compatible with the well and formation, as well as the polymer solution and its cross-linking agent. Gasoil and mineral oil are particularly desirable because they are readily available at reasonable cost and are compatible with the well.

The water phase is preferably formed by mixing a solution of the desirable cross-linkable polymer in water. The water can be obtained from any acceptable source, and may include brine, fresh water, and the like.

The emulsion may advantageously be prepared having a ratio by volume of oil to water of between about 80:20 and about 20:80. The proper ratio should be selected depending upon the expected fracturing force required for fracturing the well, as well as various pumping parameters particular to a subject well. The emulsion is preferably prepared having an average droplet size of less than about 20 micrometers, more preferably between about 2 micrometers and about 5 micrometers.

In accordance with the present invention, the emulsion preferably includes a cross-linking agent which cross-links the polymer so as to increase viscosity of the overall emulsion, thereby rendering the emulsion ideal for use as a fracturing fluid and as a carrier of a propping agent. In this regard, various polymers are suitable. Preferred polymers include polysaccharides, cellulose derivatives, xanthan gums, and the like, and hydroxy propyl guar is one example of a suitable polymer. The polymers are preferably present in the polymer solution in an amount between about 10 and about 70 lbs of polymer per 1000 gallons of water.

The cross-linking agent in accordance with the present invention may suitably be any agent which will produce or serve as a source of desired ions which act to cross-link the various chains or branches of polymer present in the water phase of the emulsion. Preferred cross-linking agents include aluminum, titanium, zirconium, antimony, chromium, borate and mixtures thereof, all of which can serve as the source of free ions as desired. Borate and any source of free borate ions in solution are preferred.

The water phase of the emulsion of the present invention may also advantageously be mixed with a salt such as potassium chloride and the like so as to avoid excessive clay swelling which would adversely impact upon the attributes of the emulsion.

Emulsions according to the invention also preferably include a suitable surfactant so as to facilitate forming of the emulsion as well as to improve stability of same. Suitable surfactants are discussed below.

The emulsion is preferably mixed with and serves as an excellent carrier for a propping agent, as mentioned above. The propping agent should be selected as any granular substance having a desirable particle or grain size which will serve to lodge in cracks and fractures induced into the formation, and thereby hold such cracks or fractures open so as to enhance hydrocarbon production from same. Such propants are well known to the person of ordinary skill in the art.

Before cross-linking, the emulsion may suitably have a viscosity of between about 90 and about 150 cP at 511 s⁻¹ and 80°F. The cross-linking of the emulsion provides an increase in emulsion viscosity, preferably to a viscosity of between about 150 and about 750 cP at 170 s⁻¹ and 180°F. This allows the emulsion to be used as an excellent carrier for the propping agent so as to advantageously deliver the propping agent to the formation as it is fractured. This advantageously allows for the formation to be fractured and propping agent delivered all utilizing a single emulsion fracturing fluid and process step.

Through use of an oil in water emulsion and cross-linking of polymer in the water phase of the emulsion, a fluid is provided which has the desired viscosity and pumpability, and which also serves as an excellent propping agent carrier. The combination of oil in water emulsion with cross-linked polymer advantageously provides for reduced amounts of polymer and cross-linking agent which results in reduced cost.

In accordance with the present invention, an oil in water fracturing fluid emulsion can be prepared as follows.

The water phase is prepared by mixing the selected polymer in water until a solution is formed.

The oil phase, such as gasoil, mineral oil and the like, is obtained and an emulsion is formed of the oil phase in the water phase, preferably utilizing a surfactant. Suitable surfactants include a combination of sulfates, alkaline metal sulfonates and non-ionic surfactants selected from the group consisting of alkyl phenols, aliphatic-ethoxylated alcohols, and mixtures thereof. A surfactant package is preferably provided having a ratio of anionic surfactant to non-ionic surfactant, by volume, of between about 70:30 and about 80:20.

Once the emulsion is formed, it has been found in accordance with the invention that the pH may frequently need to be adjusted so as to allow for the desired cross-linking. In order to obtain the desired cross-linking, a pH of between about 9.0 and about 13.0, preferably between about 9.5 and about 12.0, is critical. The pH can be adjusted by mixing with any suitable and well-known pH controller such as monoethanolamine, sodium hydroxide, potassium hydroxide and the like. Once the suitable pH is obtained, the emulsion is then cross-linked by mixing with a suitable cross-linking agent such as an agent selected from the group consisting of aluminum, titanium, zirconium, antimony, chromium, borate and mixtures thereof. In accordance with the present invention, borate compounds are most preferred, as are compounds which generate borate ions in solution in the water phase, as such borate ions appear to enhance the cross-linking process so as to obtain the desired viscosity of the emulsion in accordance with the present invention. If the emulsion is to be transported by flowing through conduits before use, it may be desirable to add the cross-linking agent after such transport. Thus, the cross-linking agent can be added at the time the emulsion is formed, just before or simultaneously with addition of the propping agent, or any point therebetween.

Once the emulsion is complete, any desired propping agent or propant can be mixed into the emulsion as desired, and the emulsion serves as an excellent carrier for carrying the propping agent down through a well and to a subterranean formation which is to be the subject of a fracturing process. Typically, the propping agent is not added to the emulsion until just before use.

Once the formation is fractured, it is desirable to remove the fracturing fluid, especially any polymers and the like which remain after the process. In order to facilitate removal of the fracturing fluid, it is desired to break the cross-link of the polymer so as to reduce viscosity and allow for pumping of the broken fracturing fluid back to the surface. Breaking can be accomplished utilizing breakers such as oxidizer breakers, enzymes and combinations thereof. Such breaking agents or breakers are well known to a person of ordinary skill in the art.

Once the cross-linking is broken, the reduced viscosity emulsion advantageously encapsulates remaining or residual polymer so as to facilitate removal of the entire fracturing fluid including polymers, while nevertheless leaving propping agents behind, in cracks or fractures in the formation, so as to enhance hydrocarbon production from the formation as desired.

The fracturing fluid in accordance with the present invention is advantageous in that viscosities up to 750 cP are provided at temperatures between about 110°F and about 220°F, which provides for excellent propping agent transport. Further, the system uses very low polymer concentration, providing excellent results utilizing 14-18 lbs. of polymer per 1000 gallons of water and providing satisfactory results up to temperatures of about 180°F and potentially up to about 220°F. This is a reduced concentration and improvement in temperature tolerance as compared to conventional fracturing fluids.

In addition, the oil phase is low cost, and all additives are commercially available.

### Example

This example demonstrates preparation of a fracturing fluid in accordance with the present invention, as well as analysis of same.

0.5 barrels of a gasoil-mineral oil mixture were obtained for use as the oil phase.

The water phase was provided as 0.5 barrels of fresh water mixed with polymer hydroxy propyl guar (HPG) polymer at a rate of 50 lbs. polymer per 1000 gallons of water, and 6 lbs. of potassium chloride per barrel were added to the water. During emulsion formation, a commercial surfactant was used at a rate of 20 lbs. of surfactant per barrel of total emulsion. This surfactant is an anionic:nonionic surfactant having a ratio of 75:25, and is selected so as to be compatible with drilling fluid and other well fluids to be encountered. The emulsion was formed at 511 s⁻¹ and 80°F, and the resulting emulsion had a viscosity of 130 cP. Sodium hydroxide and monoethanolamine were then added to the emulsion until a pH resulted that was in the range of between about 9.5 and about 12, in this case 11.5.

Boric acid was then added to the pH-adjusted emulsion so as to induce cross-linking in the polymer. Boric acid was added at the rate of 0.5 lb/1000 gallons of emulsion. The emulsion so formed was then tested for rheological behavior, particularly when treated with peroxidisulfate of ammonium (breaker) over time. The results are set forth in Table 1 below showing pseudo plastic index (n') and consistency index (k'). Table 1 shows that the cross-linked emulsion is a highly pseudoplastic fluid at different concentrations of breaker, and therefore has lower viscosity at high shear rate and high viscosity at low shear rate as desired.

**Table 1**

| **170°F** | | | | | | | | |
|---|---|---|---|---|---|---|---|---|
| **Breaker (lbs./1000 gal)** | | | | | | | | |
| **Time (min)** | **0** | | **0.5** | | **0.75** | | **1.0** | |
| | **n'** | **K'** | **n'** | **K'** | **n'** | **K'** | **n'** | **K'** |
| **5** | **0.4160** | **0.2700** | **0.3992** | **0.2170** | **0.5846** | **0.1527** | **0.3396** | **0.1656** |
| **38** | **0.7198** | **0.0346** | **0.5590** | **0.0497** | **0.4924** | **0.0500** | **0.5129** | **0.0149** |
| **74** | **0.7112** | **0.0349** | **0.4597** | **0.0613** | **0.439** | **0.0525** | **0.4875** | **0.0157** |
| **110** | **0.5895** | **0.0605** | **0.4502** | **0.0514** | **0.5018** | **0.0310** | **0.4300** | **00178** |
| **146** | **0.4171** | **0.1160** | **0.3863** | **0.0562** | **0.4431** | **0.0348** | **0.4328** | **0.0185** |
| **186** | **0.2723** | **0.1611** | **0.3482** | **0.0600** | **0.3680** | **0.0451** | **0.4063** | **0.0226** |

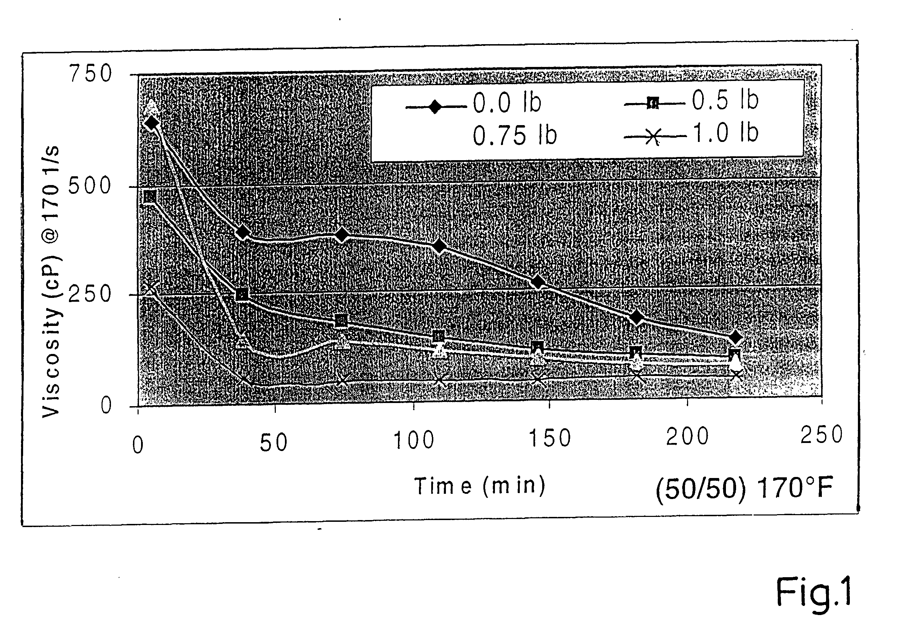

The emulsion prepared in this example was also tested utilizing different amounts of breaker so as to illustrate viscosity change over time. Figure 1 shows the emulsion of the present invention when treated with different amounts of breaker, and the resulting viscosity at 170°F. As shown, 0.5 lbs/1000 gallons of breaker and greater provided for excellent reduction in viscosity after an initial high-viscosity period which is ideal for utilizing the emulsion of the present invention as a fracturing fluid. The high viscosity in the initial period allows the fluid to be utilized for forming fractures, while the break in cross-linking and reduction in viscosity allows for the emulsion, with encapsulated polymer, to be readily removed from the well, leaving propping agent behind.

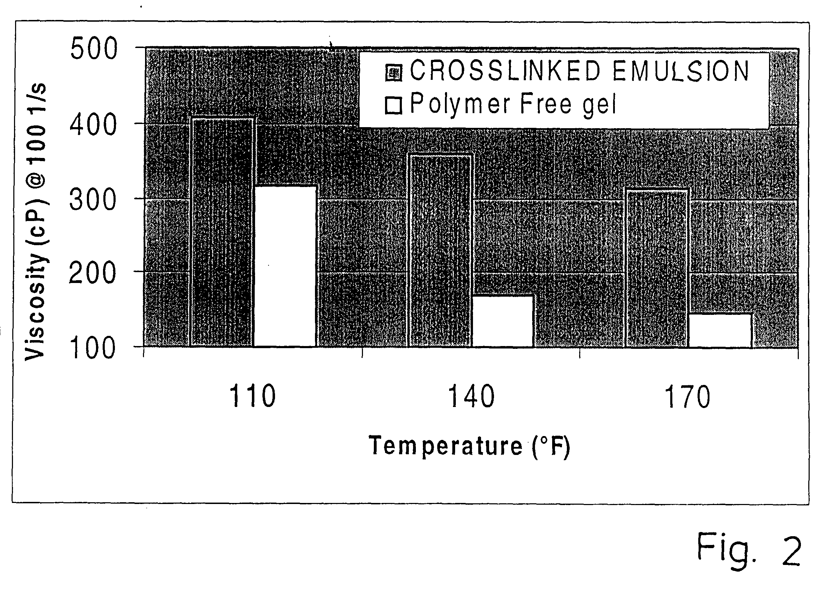

Figure 2 further shows the emulsion as prepared in this example as compared to a conventional polymer-free gel in viscosity at different temperatures, which further demonstrates the benefit of the cross-linking of the present invention in providing for use as a fracturing fluid, as well as a propping agent transport. As shown, at temperatures between 110°F and 170°F, the cross-linked emulsion has a greater viscosity in all cases, with the degree of magnitude of improvement in viscosity of the cross-linked emulsion being greater as temperature increases.

It should readily be appreciated that in accordance with the present invention, an emulsion and method for forming same have been provided which allow for an effective and inexpensively prepared fracturing fluid. Further, methods are provided for use of this fracturing fluid in fracturing formations so as to enhance hydrocarbon and other desired fluid production.

This invention may be embodied in other forms or carried out in other ways without departing from the spirit or essential characteristics thereof. The present embodiment is therefore to be considered as in all respects illustrative and not restrictive, the scope of the invention being indicated by the appended claims, and all changes which come within the meaning and range of equivalency are intended to be embraced therein.

## Claims

1. An oil in water fracturing fluid emulsion, comprising:
a dispersed oil phase; and
a continuous water phase comprising a solution of cross-linkable polymer in water.

2. The emulsion of claim 1, wherein said emulsion has a viscosity of between about 90 and about 150 cP at 511 s⁻¹ and 80°F.

3. The emulsion of claim 1, wherein said polymer is cross-linked and said emulsion has viscosity of between about 150 cP and about 750 cP at 170 s⁻¹ and 180°F.

4. The emulsion of claim 1, wherein said oil phase is selected from the group consisting of gasoil, mineral oil and mixtures thereof.

5. The emulsion of claim 1, wherein said water phase contains said polymer in an amount between about 10 and about 70 lbs. of said polymer per 1000 gallons of water.

6. The emulsion of one of the claims 1 to 5, wherein said polymer is selected from the group consisting of polysaccharide, cellulose derivatives, xanthan gum and combinations thereof, preferably wherein said polymer is hydroxy propyl guar.

7. The emulsion of claim 1 or 2 or 3, further comprising a propping agent carried by said emulsion.

8. A method for making a fracturing fluid emulsion, preferably an emulsion of one of the foregoing claims, comprising the steps of:
providing a water phase comprising a solution of a cross-linkable polymer in water;
providing an oil phase;
forming an oil in water emulsion from said water phase and said oil phase;
adjusting pH of said emulsion to a pH of between about 9.0 and about 13.0; and
cross-linking said polymer solution so as to provide a cross-linked emulsion.

9. The method of claim 8, wherein said cross-linked emulsion has a viscosity of between about 150 and about 750 cP at 170 s⁻¹ and 180 °F.

10. The method of claim 8 or 9, wherein said oil phase is selected from the group consisting of gasoil, mineral oil and mixtures thereof and/or wherein said water phase contains said polymer in an amount between about 10 and about 70 lbs. of said polymer per 1000 gallons of water.

11. The method of claim 8 or 10, wherein said polymer is selected from the group consisting of polysaccharide, cellulose derivatives, xanthan gum and combinations thereof, preferably wherein said polymer is hydroxy propyl guar.

12. The method of one of the claims 8 to 11, wherein said cross-linking step comprises mixing said emulsion with a cross-linking agent.

13. The method of one of the claims 8 to 12, wherein said cross-linking agent is selected from the group consisting of aluminum, titanium, zirconium, antimony, chromium, borate and mixtures thereof.

14. A method for fracturing a subterranean formation, comprising the steps of providing an oil in water fracturing fluid emulsion comprising a dispersed oil phase; a continuous water phase comprising a solution of cross-linkable polymer in water; and a propping agent carried by said emulsion;
pumping said emulsion into a well communicated with a subterranean formation so as to form cracks in said formation; and
removing said emulsion whereby said propping agent is positioned in said cracks.

15. The method of claim 14, wherein said emulsion is cross-linked and wherein said removing step comprises breaking cross-linking of said polymer so as to provide a reduced viscosity emulsion, and removing said reduced viscosity emulsion from said well.

16. The method of claim 14 or 15, wherein said reduced viscosity emulsion encapsulates said polymer whereby said removing step removes said polymer.
